# EUROPEAN PATENT APPLICATION

(11) **EP 4 631 716 A1**
(43) Date of publication of application: **15.10.2025**
(21) Application number: 25159585.6
(22) Date of filing: 24.02.2025
(51) Int. Cl.: B32B 5/26, B29C 70/30, B32B 5/02

(54) **SYSTEMS AND METHODS FOR FORMING A STRUCTURE INCLUDING A BIO-BASED RESIN PRODUCT**

(30) Priority: 08.04.2024 US 202418629073
(71) Applicant: The Boeing Company, Arlington, VA 22202 (US)
(72) Inventor: TRAN, Davis, Arlington, 22202 (US); D'ALESSANDRO, Emma Louise Tong, Arlington, 22202 (US)
(74) Representative: Kilburn & Strode LLP

(57) **Abstract**

A method of forming a structure includes positioning a first layer component onto a portion of a top surface of a second layer component and positioning a third layer component onto a portion of a bottom surface of the second layer component to form a layered material assembly. The first layer component and the third layer component are configured to be manufactured of a first fabric and a bio-based resin product, and the second layer component is configured to be manufactured of a second material and the bio-based resin product. The method includes exposing the layered material assembly to one or more curing conditions to create a cured material assembly, and forming the cured material assembly into the structure configured to be disposed onboard an aircraft system.

## Description

### FIELD OF THE DISCLOSURE

Examples of the present disclosure generally relate to systems and methods for forming structures having a bio-based resin product that may be used on or within an aircraft.

### BACKGROUND OF THE DISCLOSURE

Traditionally, structures and/or panels of an airplane, such as a sidewall panel, a stowage bin panel, or the like, are manufactured of a phenolic resin, a plastic material, or another material that may be derived from fossil fuels. These fossil-fuel based materials provide a lightweight and inexpensive product that may be used to form structures, panels, and surfaces within the airplane.

The phenolic resin materials, however, are not bio-based and are made from petroleum feedstocks. For example, when structures of the airplane degrade, the degraded structures may need to be removed from the aircraft system and replaced with a new, non-degraded structure. The removed, degraded structures, however, cannot be recycled and may instead end up in a landfill or other waste collection system. As can be appreciated, however, the non-biobased products lead to a significant amount of waste being generated.

### SUMMARY OF THE DISCLOSURE

A need exists for the formation of structures that may be used in vehicles and/or buildings that may be manufactured of non-petroleum based, organic materials, such as a bio-based resin product.

With those needs in mind, certain examples of the present disclosure provide a system and method including coupling a first layer component with a second layer component, and coupling a third layer component with the second layer component to form a layered material assembly. For example, a bottom surface of the first layer component may be coupled with a portion of a top surface of the second layer component, and a top surface of the third layer component may be coupled with a portion of a bottom surface of the second layer component, such as to position the second layer component between the first and third layer components. Optionally, a fourth layer component may be coupled with a bottom surface of the third layer component.

In at least one example, one or more of the layer components may include a bio-based resin product. As one example, the first and/or third layer components may be manufactured of a fabric that may be pre-impregnated with a bio-based resin product, such as a polyfurfuryl alcohol (PFA) resin product. Additionally, the second layer component may be manufactured of a material that has been exposed to the bio-based resin product.

In at least one example, the layered material assembly may be exposed to one or more curing, bonding, or coupling conditions (e.g., thermal, pressure, humidity, etc.) to cure, bond, or couple the layer components together. The cured material assembly may be formed into one or more structures that may be disposed onboard an aircraft system, such as a sidewall panel or a stowage bin panel of the aircraft system. For example, the cured material assembly may be stamped, pressed, molded, or the like, into the one or more structures that may be disposed onboard the aircraft system.

In at least another example, exposing the layered material assembly to the one or more curing conditions may change one or more characteristics of one or more materials of the first layer component, the second layer component, and/or the third layer component. For example, exposure to the curing conditions may change a hardness of one of the materials, an elasticity of one of the materials, a tensile strength of one of the materials, or the like.

Certain examples of the present disclosure provide a layered material assembly that includes a first layer component, a second layer component that is coupled with the first layer component, and a third layer component that is coupled with the second layer component. The first layer component and the third layer component may be manufactured of a first fabric and a bio-based resin product. The second layer component may be manufactured of a second material and the bio-based resin product. The bio-based resin product may be dispersed throughout the first fabric, such that the first fabric may be impregnated with the bio-based resin product. The bio-based resin product may be directed onto an outer or exterior surface of the second material. For example, the second material may be coated with the bio-based resin product. In one example, the bio-based resin product may seep into, soak into, extend or disperse into one or more interior surfaces of the second material.

Examples of the present disclosure provide a method that includes positioning a first layer component onto a portion of a top surface of a second layer component, and positioning a third layer component onto a portion of a bottom surface of the second layer component. The first and third layer components may be manufactured of a first fabric and a bio-based resin product, and the second layer component may be manufactured of a second material and the bio-based resin product. The layered material assembly may be exposed to one or more curing conditions to create a cured material assembly. The cured material assembly may be formed into a structure that may be disposed onboard an aircraft system.

### BRIEF DESCRIPTION OF THE DRAWINGS

Figure 1 illustrates an exploded perspective view of a layered material assembly, according to an example of the present disclosure.
Figure 2 illustrates an exploded side view of the layered material assembly shown in Figure 1.
Figure 3 illustrates an exploded side view of a layered material assembly, according to an example of the present disclosure.
Figure 4 illustrates a flowchart of a method, according to an example of the present disclosure.
Figure 5 illustrates a perspective front view of an aircraft, according to an example of the present disclosure.
Figure 6 illustrates a perspective internal view of an internal cabin of a vehicle, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As described herein, examples of the present disclosure provide systems and methods for forming a layered material assembly that includes one or more fabrics and bio-based resin products, curing the layered material assembly, and forming the cured layer material assembly into one or more structures. The one or more formed structures may be coupled with or disposed within a system, such as an aircraft system or other vehicle system, a building or other stationary structure, or the like. The layered material assembly may be formed by coupling a first layer component with a first side of a second layer component, and coupling a third layer component with a second side of the second layer component.

In at least one example, the first, second, and/or third layer components may be formed and/or manufactured with a fabric or other woven material, and the fabric material may be exposed to the bio-based resin product. For example, the bio-based resin product may be sprayed onto a fabric, onto a honeycomb sheet, the fabric may be dipped or dredged in a bath or pool of a liquid form of the bio-based resin product, or the like. In one example, the bio-based resin product may be a polyfurfuryl alcohol (PFA) resin product or another material of natural and/or biological origin. For example, the bio-based resin product may be a non-petroleum based and organic material having a biomass origin.

In one or more examples, two or more of the layer components may be manufactured of the same, substantially the same, or one or more common materials. Optionally, two or more of the layer components may be manufactured via the same or a common manufacturing process. Optionally, two or more of the layer components may have one or more common characteristics (e.g., harness, elasticity, etc.). Optionally, one or more of the layer components may include one or more attributes (e.g., designs, colors, textures, features, etc.) such as on an exterior or outer surface of the layer component. The one or more attributes may be based on a location within a vehicle and/or building structure where the structure, formed by the layered material assembly, may be disposed.

In at least one example, the layered material assembly of the plural layer components may be exposed to one or more curing, bonding, or coupling conditions to chemically and/or physically bond, couple, and/or attach the plural layer components together to form a cured material assembly. The cured material assembly may be molded, stamped, formed, or the like, into the one or more structures that may be disposed and/or coupled with a vehicle, building, or an alternative system. In at least one example, the curing and the forming of the structure may be completed in a single manufacturing process. In alternative examples, the forming of the cured material assembly and the forming of the structure may be completed in two or more different manufacturing processes.

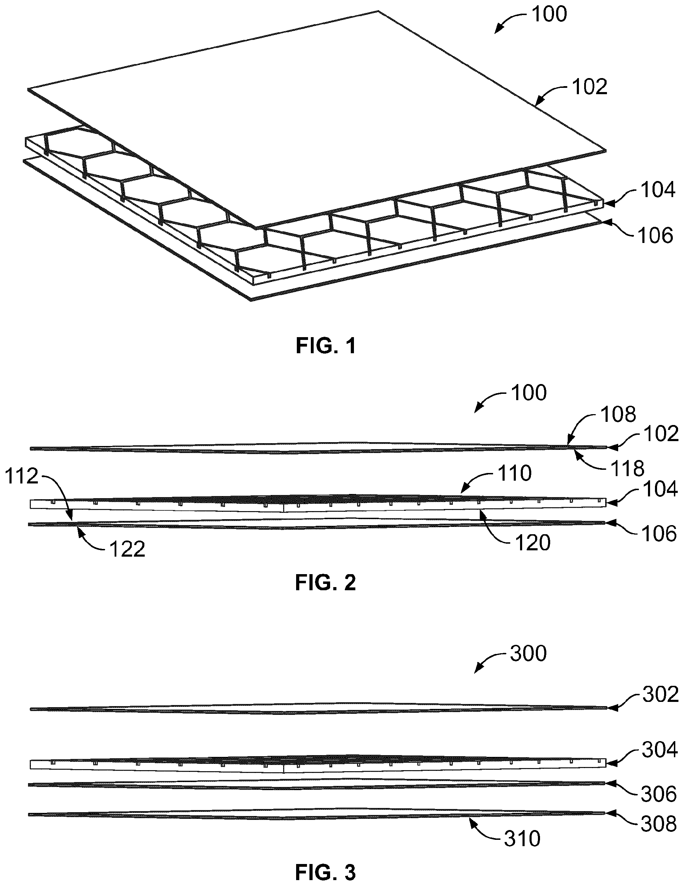

Figure 1 illustrates an exploded perspective view of a layered material assembly 100 and Figure 2 illustrates an exploded side view of the layered material assembly 100, according to an example of the present disclosure. In the illustrated example, the layered material assembly 100 includes a first layer component 102, a second layer component 104, and a third layer component 106. The first layer component 102 includes a first top surface 108 and a first bottom surface 118, the second layer component 104 includes a second top surface 110 and a second bottom surface 120, and the third layer component 106 includes a third top surface 112 and a third bottom surface 122.

The layered material assembly 100 may be formed by the first bottom surface 118 of the first layer component 102 mating with a portion of the second top surface 110 of the second layer component 104, and by the second bottom surface 120 of the second layer component 104 mating with a portion of the third top surface 112 of the third layer component 106.

In one or more examples, one or more of the first layer component 102 or the third layer component 106 may be manufactured of a first fabric and a bio-based resin product. The first fabric may be a woven and/or a non-woven fabric or fabric material. The fabric may be manufactured of and/or include fiberglass, carbon fiber, polyaramid, or the like. In one or more examples, the first layer component 102 and the third layer component 106 may be manufactured of the same first fabric. In alternative examples, the first layer component 102 may be manufactured of a fabric that has one or more first characteristics (e.g., weight, thickness, weave structure, raw materials, or the like) and the third layer component 106 may be manufactured of a different fabric that one or more different, second characteristics (e.g., a different weight, thickness, weave structure, fiber materials, or the like) relative to the fabric of the first layer component 102.

The bio-based resin product may be a material and/or product that may be at least partially derived from one or more materials of natural and/or biological origin. For example, the bio-based resin product may be derived from one or more of plants, renewable agricultural materials, marine materials, forestry materials, or one or more other non-petroleum based and organic materials having a biomass origin. In one or more examples, the bio-based resin product may be and/or may contain a polyfurfuryl alcohol (PFA) resin or PFA resin product that may be derived from bio-waste (e.g., sugarcane). In one or more examples, the first layer component 102 and the third layer component 106 may be manufactured using a same or common bio-based resin product. In alternative examples, the bio-based resin product used within the first layer component 102 may be different and/or may have one or more different characteristics than the bio-based resin product used within the third layer component 106.

The first fabric of the first layer component 102 and/or the third layer component 106 may be exposed to, coupled with, pre-impregnated with, or the like, the bio-based resin product. For example, the first fabric may be exposed to the bio-based resin product (e.g., by a spraying application, dipping or dredging application, or the like) such that the bio-based resin product extends through at least a portion of the first fabric and is coupled with one or more interior and/or exterior fibers of the first fabric. For example, the first fabric may be at least partially reinforced, formed, molded, or the like, by the bio-based resin product.

The second layer component 104 may be manufactured of a second material and a bio-based resin product. In one or more examples, the second material may be manufactured of a paper or paper product that may include one or more synthetic fibers, such as an aramid fiber product (e.g., a para-aramid material, a meta-aramid material, or the like). For example, the second material may be formed by paper or a paper product that is formed into honeycomb sheets having a predetermined thickness.

The bio-based resin product of the second layer component 104 may be the same or substantially the same as the bio-based resin product used within the first and/or third layer components 102, 106. In alternative examples, the bio-based resin product of the second layer component 104 may be different and/or may have one or more different characteristics than the bio-based resin product used with the first and/or third layer components 102, 106. The second material of the second layer component 104 may be exposed to the bio-based resin product such as by a dipping application, a spraying application, a dredging application, or the like, of the bio-based resin product to the second material. For example, the honeycomb sheets of the second material may be dipped into a bath or pool of the bio-based resin product so that the bio-based resin product is applied to one or more interior and/or exterior surfaces of the second material to form the second layer component 104.

In the illustrated examples shown in Figures 1 and 2, the layered material assembly includes three layers of materials that are coupled together to form the layered assembly. In one or more examples, the layered material assembly may be formed by four or more layers of materials that may be coupled together. For example, Figure 3 illustrates a layered material assembly 300 according to an example of the present disclosure. The layered material assembly 300 includes a first layer component 302, a second layer component 304, a third layer component 306, and a fourth layer component 308. In one or more examples, the first, second, and third layer components 302, 304, 306 may be the same or substantially the same as the first, second, and third layer components 102, 104, 106 shown in Figures 1 and 2 (e.g., the same or similar materials, materials having the same or similar material properties, or the like).

The fourth layer component 308 may be coupled with a portion of the third layer component 306. In one or more examples, the fourth layer component 308 may include one or more materials that may be the same as or similar to one or more materials of one of the first, second, and/or third layer components 302, 304, 306. For example, the fourth layer component may be the same as or substantially the same as the third layer component 306 such that the layered material assembly may include two or more layers of the same materials disposed on one or both sides of the second layer component 304 (e.g., the core material). In one or more examples, the layered material assembly may include one or more layers operably coupled together and disposed on one side of the second layer component 304 (e.g., a bottom side of the second layer component 304), and/or one or more layers operably coupled together and disposed on the other side of the second layer component 304 (e.g., a top side of the second layer component 304). In another example, the fourth layer component 308 may be manufactured of one or more materials or material products that differ from the materials and/or products used to form the first, second, and third layer components 302, 304, 306.

In one or more examples, a fourth bottom surface 310 of the fourth layer component 308 may include one or more attributes or features such as textures, imagery, colors, design arrangement, or the like. The layered material assembly 300 may be used to form one or more structures and/or components that may be used within a system, a building, or the like, and the one or more attributes may be based at least in part on location within the system and/or building that the structure may be positioned. For example, the layered material assembly may be used to form a portion of a sidewall panel of an aircraft system, and the one or more attributes of the fourth bottom surface 310 may be based on design and/or décor requirements of the sidewall panel of the aircraft. In another example, the layered material assembly 300 may be formed into a structure that may be used within a building, and another material (e.g., a wall paper material, paint, or the like) may be applied to the fourth bottom surface 310 of the fourth layer component 308 after the structure, formed by the layered material assembly 300, is installed within the building. The fourth bottom surface 310 may include one or more attributes that may promote and/or encourage the application of a paint product to be applied to the fourth bottom surface 310 of the fourth layer component 308.

In one or more examples, the layered material assembly may include two or more layers of layer components that may be coupled together to form the layered material assembly. The material(s) and/or product(s) used within each of the layer components may be based on one or more requirements of the structure formed by the layered material assembly (e.g., a hardness requirement, a thickness requirement, thermal requirements, material toxicity requirements, flammability requirements, aesthetic requirements, or the like).

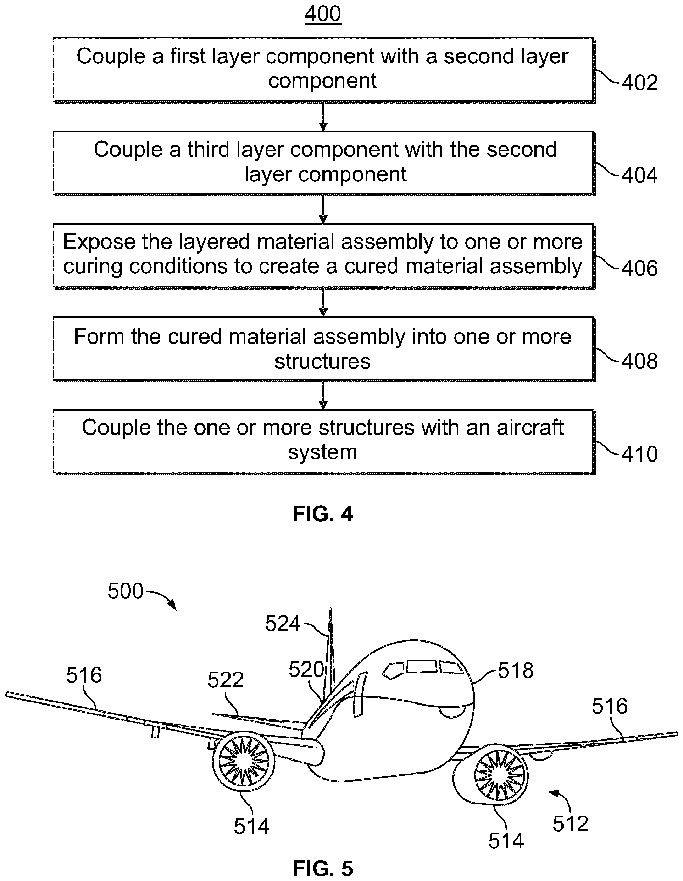

Figure 4 illustrates a flow chart 400 of a method of forming a structure, according to an example of the present disclosure. At 402, a first layer component is coupled with a portion of a second layer component, and at 404, a third layer component is coupled with a portion of the second layer component. For example, the first, second, and third layer components are arranged such that the second layer component is disposed between the first and third layer components to form a layered material assembly. Optionally, the layered material assembly may be formed by positioning two or more duplicated first layer components onto a first side of the second layer component, and/or positioning two or more duplicated third layer components onto a second side of the second layer component.

At 406, the layered material assembly may be exposed to one or more curing conditions to create a cured material assembly. For example, exposing the layered material assembly to the curing conditions may physically and/or chemically bond, cure, couple, or the like, the layered components together. In one example, the layer components may be arranged, stacked, and/or positioned together, and may be placed within a curing device that may expose the layered material to one or more bonding, coupling, and/or curing conditions (e.g., temperature, humidity, pressure, or the like). For example, the cured material assembly may be formed by placing the layered material assembly in a vacuum bag, and may be exposed to one or more of temperature, pressure, and/or humidity conditions to form the cured material assembly. As another example, the cured material assembly may be formed by using a metal die, a metal die set, an autoclave, an oven, or the like.

In one or more examples, exposing the layered material assembly to the one or more curing conditions to create the cured material assembly may change one or more characteristics of one or more of the first layer component, the second layer component, and/or the third layer component of the layered material assembly. For example, exposing the layered material assembly to the thermal, pressure, and/or humidity conditions to cure the layered material assembly may change a hardness, an elasticity, a tensile strength, a toughness, a ductility, one or more chemical properties, or the like, of the layered material assembly. The change in one or more material characteristics may be based on the curing conditions (e.g., temperature level, humidity level, pressure level, time of exposure, or the like) that may be used to form the cured material assembly.

At 408, the cured material assembly may be formed into one or more structures. In one or more examples, the step 408 of forming the material assembly into the one or more structures may occur at the same time as, or at substantially the same time as the step 406 of curing the material assembly. For example, the cured material assembly and the formed structure(s) may be created in the same manufacturing operation, using the same manufacturing equipment, exposing the materials to the same conditions, or the like. For example, the layered material assembly may be positioned within a vacuum bag that may be used to cure the layered material assembly and form the cured material assembly into the structure in a single manufacturing step.

Optionally, the steps of curing the material assembly and forming the structure may be completed in two or more different manufactured processes or steps, using different tools, machines, and/or equipment, exposing of the materials to different curing and forming conditions, or the like. For example, the step 408 may occur at a time after the step 406, the cured material assembly may be exposed to different conditions at step 408, the step 408 of forming the one or more structures may require the use of one or more different pieces of equipment, or the like. For example, the cured material assembly may be positioned within a metal die or metal die set that may be used to form the cured material assembly into a structure by applying heat and/or pressure to the cured material assembly. The one or more structures may be formed by stamping, pressing, and/or molding the cured material assembly.

In one or more examples, at step 408 the cured material assembly may be co-cured with one or more other materials, objects, another cured material assembly, or the like. For example, two or more portions of a cured material assembly may be formed together (e.g., molded and/or cured together) into a single structure.

In one or more examples, at step 408 a fourth layer component may be applied to the cured material assembly prior to the cured material assembly being formed into the one or more structures. For example, the fourth layer component may include one or more attributes that may be based on design and/or décor requirements. The decorative surface and/or layer of the fourth layer component may be applied to a press or die set with the cured material assembly such that the formed structure is a common formed structure having a complete detail assembly.

In one or more embodiments, the equipment used to cure and/or form the structures (e.g., the metal die(s), form(s), the vacuum bag and tool(s), or the like,) may be the same equipment that may be used to form non-biobased structures (e.g., structures that include one or more phenolic resin products). For example, the same tool or die set may be used to form structures having a bio-based resin product and to form structures that are manufactured with non-biobased materials. In one or more embodiments, one or more curing conditions may vary between forming a biobased structure (e.g., having a bio-based resin product) and forming a non-biobased structure (e.g., having a phenolic resin product). For example, a temperature or pressure condition required to cure the bio-based resin product may be different than a temperature or pressure condition required to cure a phenolic resin product.

In one or more examples, a color and/or darkness level of the structure formed by the bio-based resin product may be different than a color and/or darkness level of a structure that is formed by a non-biobased material. For example, the cured material assembly including the bio-based resin product may be formed into a sidewall panel that may be used within an aircraft system. A shade of darkness of the formed sidewall panel may differ from a shade of darkness of a sidewall panel that may be formed using a non-biobased material. In one example, the different shade or level of darkness of the bio-based resin formed structure may be sufficient to block an amount or level of sunlight at a window opening of the sidewall panel that is greater than an amount or level of sunlight that may be blocked by a non-biobased material. For example, a sidewall panel that is formed by a non-biobased material may require a secondary product to be applied around a portion of a window opening of the sidewall panel to control an amount of sunlight that may be let into the internal cabin of the aircraft. For example, the secondary product may not be required and/or may not need to be added to the sidewall panel that is formed using the bio-based resin product formed structure described herein.

In one or more examples, the layered material assembly may be in the form of a roll, a sheet, or the like, with the first, second, and third layer components arranged within the roll and/or sheet. As one example, the layered material assembly formed and/or held as a roll may be separated into plural individual pieces of the layered material assembly, and the individual pieces of the layered assembly may be cured and/or formed into the structures. Optionally, the layered material assembly formed or held as a sheet may be separated or sectioned off into one or more pieces, such as based on the structure that will be formed by the layered material assembly. Optionally, the layered material assembly and/or the cured material assembly may be positioned, contained, handled, or the like, by one or more additional and/or alternative methods.

At 410, the one or more structures formed of the cured material assembly may be disposed onboard and/or coupled with a system, such as an aircraft system. Figure 5 illustrates a perspective front view of an aircraft 500, according to an example of the present disclosure. The aircraft 500 includes a propulsion system 512 that may include two turbofan engines 514, for example. Optionally, the propulsion system 512 may include more engines 514 than shown. The engines 514 are carried by wings 516 of the aircraft 500. In other examples, the engines 514 may be carried by a fuselage 518 and/or an empennage 520. The empennage 520 may also support horizontal stabilizers 522 and a vertical stabilizer 524.

The fuselage 518 of the aircraft 500 defines an internal cabin, which may contain interior sidewall panels, ceiling panels, and flooring panels. The internal cabin may include a cockpit, one or more work sections (for example, galleys, personnel carry-on baggage areas, and the like), one or more passenger sections (for example, first class, business class, and coach sections), and an aft section. Portions of the aircraft 500, such as the ceiling panels, sidewall panels, or the like, can be formed of the bio-based resin products as described herein.

Optionally, instead of an aircraft system, examples of the present disclosure may be used with various other stationary and/or non-stationary structures. For example, the bio-based resin products may be used to form one or more structures used on and/or within buildings or other vehicles such as automobiles, buses, locomotives and train cars, watercraft, spacecraft, and the like.

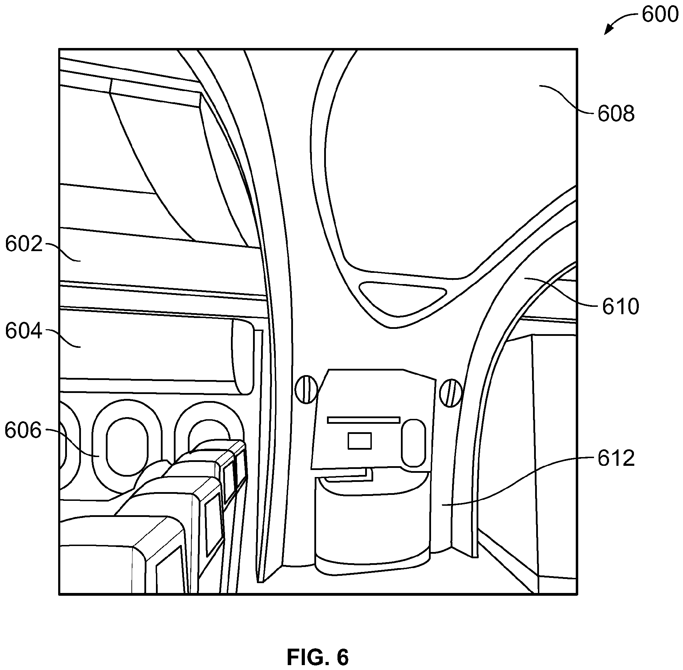

Figure 6 illustrates a perspective internal view of an internal cabin 600 of a vehicle, (such as the aircraft 500 shown in Figure 5) according to an example of the present disclosure. The internal cabin 600 includes numerous structures that may be formed by the cured material assembly described with respect to Figures 1-4, or the like. For example, ceiling panels 602, stowage bin panels and/or assemblies 604, sidewall panels 606, ceiling covers 608, doorway arch panels 610, doorway side panels 612, partitions, closets, lavatory walls, light valences, and/or other components of the aircraft system may be formed by the layered material assembly including the bio-based resin product as described herein. In one or more embodiments, the structures formed by the bio-based cured material assembly described herein may be used and/or disposed within a new aircraft system, may replace an existing structure of the aircraft system (e.g., may be retrofitted onto an existing aircraft system), or the like.

As described herein, examples of the present disclosure provide systems and methods of forming structures of a layered material assembly, wherein at least one of the layer components of the layered material assembly are formed by a fabric or other product and a bio-based resin product. The layered material assembly that is manufactured of a bio-based resin product may be formed into a structure that may be coupled with or disposed onto an aircraft. Examples of the present disclosure provide a method and system of forming a structure using a non-petroleum based and organic material.

Further, the disclosure comprises examples according to the following clauses:
Clause 1: a method comprising:
   coupling a first layer component with a portion of a second layer component; and
   coupling a third layer component with a portion of the second layer component to form a layered material assembly, wherein the first layer component and the third layer component are configured to be manufactured of a first fabric and a bio-based resin product, wherein the second layer component is configured to be manufactured of a second material and the bio-based resin product.
Clause 2: the method of clause 1, further comprising coupling a first bottom surface of the first layer component with a second top surface of the second layer component, and coupling a second bottom surface of the second layer component with a third top surface of the third layer component.
Clause 3: the method of clauses 1 or 2, further comprising exposing the layered material assembly to one or more curing conditions to create a cured material assembly.
Clause 4: the method of clause 3, wherein exposing the layered material assembly to the one or more curing conditions changes one or more characteristics of one or more of the first layer component, the second layer component, or the third layer component.
Clause 5: the method of clause 3, further comprising forming the cured material assembly into one or more structures configured to be disposed onboard an aircraft.
Clause 6: the method of clause 5, further comprising one or more of stamping, pressing, or molding the cured material assembly to form the cured material assembly into the one or more structures.
Clause 7: the method of any of clauses 1-6, wherein the first fabric is configured to be impregnated with the bio-based resin product to form the first layer component and the third layer component.
Clause 8: the method of any of clauses 1-7, wherein the bio-based resin product is configured to be applied to one or more exterior surfaces of the second material to form the second layer component.
Clause 9: the method of any of clauses 1-8, wherein a third top surface of the third layer component is configured to be coupled with a portion of a second bottom surface of the second layer component, and further comprising coupling a fourth top surface of a fourth layer component with a portion of a third bottom surface of the third layer component, wherein the fourth layer component includes one or more attributes disposed on a fourth bottom surface of the fourth layer component.
Clause 10: a layered material assembly, comprising:
   a first layer component;
   a second layer component configured to be operably coupled with the first layer component; and
   a third layer component configured to be operably coupled with the second layer component, wherein the second layer component is configured to be disposed between the first layer component and the third layer component,
   wherein the first layer component and the third layer component are configured to be manufactured of a first fabric and a bio-based resin product, and
   wherein the second layer component is configured to be manufactured of a second material and the bio-based resin product.
Clause 11: the layered material assembly of clause 10, wherein the first layer component includes a first top surface and a first bottom surface and the second layer component includes a second top surface and a second bottom surface, wherein the second top surface of the second layer component is configured to be operably coupled with a portion of the first bottom surface of the first layer component.
Clause 12: the layered material assembly of clause 11, wherein the third layer component includes a third top surface and a third bottom surface, wherein the third top surface of the third layer component is configured to be operably coupled with a portion of the second bottom surface of the second layer component.
Clause 13: the layered material assembly of any of clauses 10-12, wherein the bio-based resin product is a polyfurfuryl alcohol (PFA) resin product.
Clause 14: the layered material assembly of any of clauses 10-13, wherein the first fabric is configured to be impregnated with the bio-based resin product to form the first layer component and the third layer component.
Clause 15: the layered material assembly of any of clauses 10-14, wherein the bio-based resin product is configured to be applied to one or more exterior surfaces of the second material to form the second layer component.
Clause 16: the layered material assembly of any of clauses 10-15, wherein the first layer component, the second layer component, and the third layer component are configured to be exposed to one or more curing conditions to form a cured material assembly.
Clause 17: the layered material assembly clause 16, wherein one or more characteristics of one or more of the first layer component, the second layer component, or the third layer component are configured to change responsive to exposure of the first layer component, the second layer component, and the third layer component to the one or more curing conditions.
Clause 18: the layered material assembly of clause 16, wherein the cured material assembly is configured to be formed into one or more structures configured to be disposed onboard an aircraft.
Clause 19: the layered material assembly of clause 18, wherein the cured material assembly is configured to be formed into the one or more structures by one or more of stamping, pressing, or molding of the cured material assembly.
Clause 20: a method of forming a structure, the method comprising:
   positioning a first layer component onto a portion of a top surface of a second layer component;
   positioning a third layer component onto a portion of a bottom surface of the second layer component to form a layered material assembly, wherein the first layer component and the third layer component are configured to be manufactured of a first fabric and a bio-based resin product, wherein the second layer component is configured to be manufactured of a second material and the bio-based resin product;
   exposing the layered material assembly to one or more curing conditions to create a cured material assembly; and
   forming the cured material assembly into the structure configured to be disposed onboard an aircraft.

As described herein, examples of the present disclosure provide biobased material structures that may be formed using one or more bio-based resin products and that may be coupled with and/or used within an aircraft. Further, examples of the present disclosure provide efficient methods of preparing and forming the bio-based resin product structures that may be installed with a new aircraft system, retrofitted onto an existing aircraft system, or the like. The bio-based structures may be formed using one or more tools, stamps, die-sets, or the like, that may be used to form non-biobased structures.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A method, comprising:
coupling a first layer component (102) with a portion of a second layer component (104); and
coupling a third layer component (106) with a portion of the second layer component (104) to form a layered material assembly (100), wherein the first layer component (102) and the third layer component (106) are configured to be manufactured of a first fabric and a bio-based resin product, wherein the second layer component (104) is configured to be manufactured of a second material and the bio-based resin product.

2. The method of claim 1, further comprising coupling a first bottom surface (118) of the first layer component (102) with a second top surface (110) of the second layer component (104), and coupling a second bottom surface (120) of the second layer component (104) with a third top surface (112) of the third layer component (106).

3. The method of claim 1 or 2, further comprising exposing the layered material assembly (100) to one or more curing conditions to create a cured material assembly, optionally wherein exposing the layered material assembly (100) to the one or more curing conditions changes one or more characteristics of one or more of the first layer component (102), the second layer component (104), or the third layer component (106).

4. The method of claim 3, further comprising forming the cured material assembly into one or more structures configured to be disposed onboard an aircraft (500), optionally further comprising one or more of stamping, pressing, or molding the cured material assembly to form the cured material assembly into the one or more structures.

5. The method of any of claims 1-4, wherein the first fabric is configured to be impregnated with the bio-based resin product to form the first layer component (102) and the third layer component (106).

6. The method of any of claims 1-5, wherein the bio-based resin product is configured to be applied to one or more exterior surfaces of the second material to form the second layer component (104).

7. The method of any of claims 1-6, wherein a third top surface (112) of the third layer component (306) is configured to be coupled with a portion of a second bottom surface (120) of the second layer component (304), and further comprising coupling a fourth top surface of a fourth layer component (308) with a portion of a third bottom surface (122) of the third layer component (306), wherein the fourth layer component (308) includes one or more attributes disposed on a fourth bottom surface (310) of the fourth layer component (308).

8. A layered material assembly (100), comprising:
a first layer component (102);
a second layer component (104) configured to be operably coupled with the first layer component (102); and
a third layer component (106) configured to be operably coupled with the second layer component (104), wherein the second layer component (104) is configured to be disposed between the first layer component (102) and the third layer component (106),
wherein the first layer component (102) and the third layer component (106) are configured to be manufactured of a first fabric and a bio-based resin product, and
wherein the second layer component (104) is configured to be manufactured of a second material and the bio-based resin product.

9. The layered material assembly (100) of claim 8, wherein the first layer component (102) includes a first top surface (108) and a first bottom surface (118) and the second layer component (104) includes a second top surface (110) and a second bottom surface (120), wherein the second top surface (110) of the second layer component (104) is configured to be operably coupled with a portion of the first bottom surface (118) of the first layer component (102), optionally wherein the third layer component (106) includes a third top surface (112) and a third bottom surface (122), wherein the third top surface (112) of the third layer component (106) is configured to be operably coupled with a portion of the second bottom surface (120) of the second layer component (104).

10. The layered material assembly (100) of claims 8 or 9, wherein the bio-based resin product is a polyfurfuryl alcohol (PFA) resin product.

11. The layered material assembly (100) of any of claims 8-10, wherein the first fabric is configured to be impregnated with the bio-based resin product to form the first layer component (102) and the third layer component (106).

12. The layered material assembly (100) of any of claims 8-11, wherein the bio-based resin product is configured to be applied to one or more exterior surfaces of the second material to form the second layer component (104).

13. The layered material assembly (100) of any of claims 8-12, wherein the first layer component (102), the second layer component (104), and the third layer component (106) are configured to be exposed to one or more curing conditions to form a cured material assembly, optionally wherein one or more characteristics of one or more of the first layer component (102), the second layer component (104), or the third layer component (106) are configured to change responsive to exposure of the first layer component (102), the second layer component (104), and the third layer component (106) to the one or more curing conditions.

14. The layered material assembly (100) of claim 13, wherein the cured material assembly is configured to be formed into one or more structures configured to be disposed onboard an aircraft (500), optionally wherein the cured material assembly is configured to be formed into the one or more structures by one or more of stamping, pressing, or molding of the cured material assembly.

15. A method of forming a structure, the method comprising:
positioning a first layer component (102) onto a portion of a top surface (110) of a second layer component (104);
positioning a third layer component (106) onto a portion of a bottom surface (120) of the second layer component (104) to form a layered material assembly (100), wherein the first layer component (102) and the third layer component (106) are configured to be manufactured of a first fabric and a bio-based resin product, wherein the second layer component (104) is configured to be manufactured of a second material and the bio-based resin product;
exposing the layered material assembly (100) to one or more curing conditions to create a cured material assembly; and
forming the cured material assembly into the structure configured to be disposed onboard an aircraft (500).
